# DEMANDE DE BREVET EUROPEEN

(11) **EP 2 823 861 A1**
(43) Date de publication de la demande: **14.01.2015**
(21) Numéro de dépôt: 14176185.8
(22) Date de dépôt: 08.07.2014
(51) Int. Cl.: A62B 35/04

(54) **Dispositif de détection de chute pour une ligne de vie; installation de ligne de vie équipée d'un tel dispositif; méthode de détection de chute associée**

(30) Priorité: 09.07.2013 FR 1356739
(71) Demandeur: TOTAL MARKETING SERVICES, 92800 Puteaux (FR)
(72) Inventeur: Plaideau, Arnaud, 1490 Court-Saint-Etienne (BE); Blaise, Jean-Hugues, 4910 Theux (BE)
(74) Mandataire: Hirsch & Associés

(57) **Abrégé**

Dispositif de détection de chute (100) pour une ligne de vie, destiné à être monté sur un amortisseur d'énergie (200) qui comprend une partie statique (210) et une partie mobile (220) solidarisées entre elles où la partie mobile se déplace en cas d'effort supérieur à une valeur seuil et actionne des moyens d'amortissement. Le dispositif de détection de chute (100) comprend un capteur (140) et un dispositif de suivi de trajectoire (120) solidarisé avec l'extrémité de la partie statique ou avec l'extrémité de la partie mobile et libre de se déplacer respectivement avec l'extrémité de la partie mobile ou avec l'extrémité de la partie statique. Ce dispositif de suivi de trajectoire est adapté à actionner le capteur quand la partie mobile se déplace de manière à générer une information.

## Description

### DOMAINE TECHNIQUE

La présente invention porte sur un dispositif de détection de chute pour une ligne de vie ; elle porte également sur une installation de ligne de vie comprenant un tel dispositif ; elle vise également une méthode de détection de chute associée, mettant en oeuvre ledit dispositif de détection de chute pour une ligne de vie.

Le domaine de l'invention est celui des équipements de protection individuelle (EPI) contre les chutes de hauteur, tels que ceux employés par exemple par des ouvriers de l'industrie opérant sur des plateformes situées en hauteur ou ceux du bâtiment qui doivent évoluer notamment sur des échafaudages, des coffrages ou des toitures situés en hauteur au cours de la construction, de la réfection d'un immeuble ou de son entretien. D'autres domaines techniques utilisent également ce type de dispositifs.

Dans le domaine des EPI contre les chutes de hauteur, il existe notamment une catégorie d'équipements appelés dispositifs d'ancrage, qui permettent de relier un utilisateur portant des équipements de type harnais de sécurité et longes à une structure d'accueil, comme par exemple une structure d'un bâtiment industriel, une partie d'un bâtiment, un pylône. Un intervenant peut ainsi être protégé en cas chute lors d'une opération en hauteur, par exemple lors d'une action sur un composant d'un dispositif industriel, d'une intervention, d'une maintenance, d'un nettoyage, d'une réfection.

En particulier, une ligne de vie est une installation de sécurité disposée sur une structure d'accueil, en général de manière permanente, qui est constituée au moins d'un câble et de deux parties d'ancrage à la structure d'accueil. Les parties d'ancrage peuvent être constituées par des dispositifs d'accrochage disposés dans la structure, par des potelets rapportés sur la structure ou par tout autre moyen susceptible d'assurer la solidarisation du câble à ladite structure d'accueil. Le câble est le plus souvent en acier. Un mousqueton ou un moyen équivalent est relié par une longe ou une sangle à un harnais porté par l'intervenant.

### ETAT DE LA TECHNIQUE

Lors d'une chute en hauteur, un effort de crête est induit dans le câble de la ligne de vie, cet effort étant défini comme l'effort maximal instantané développé dans le sens du câble sous l'effet du choc appliqué à l'instant de l'arrêt de la chute. Afin d'atténuer l'importance de cet effort de crête, il est connu d'équiper la ligne de vie d'un dispositif amortisseur d'énergie, permettant de limiter les contraintes transmises à la structure d'accueil et d'amortir l'effet de la chute de l'intervenant.

Un amortisseur d'énergie usuel comprend une partie statique et une partie mobile solidarisées entre elles où la partie mobile se déplace par rapport à la partie statique en cas d'effort supérieur à une valeur d'effort seuil et actionne des moyens d'amortissement.

En effet et afin d'éviter que les moyens d'amortissement ne se mettent en oeuvre dans des conditions d'utilisation normales, des moyens de seuil de déclenchement sont prévus de manière à ce que les moyens d'amortissement se mettent en oeuvre à partir d'une valeur d'effort seuil estimée et/ou calibrée comme correspondant à la chute d'un intervenant.

La partie statique et la partie mobile comprennent chacune des moyens de fixation disposés à une de leurs extrémités. Ladite extrémité de la partie mobile est reliée au câble de la ligne de vie auquel on attache un mousqueton ou un moyen équivalent pour relier par une longe ou une sangle un harnais porté par un intervenant. Le câble de la ligne de vie est relié à une partie d'ancrage à la structure d'accueil. L'extrémité de la partie statique est reliée directement ou par l'intermédiaire d'un autre câble à une autre partie d'ancrage à la structure d'accueil.

On entend donc par « partie statique » une partie qui, à la différence d'une « partie mobile », ne se déplace pas significativement par rapport aux parties d'ancrage quand les moyens d'amortissement se mettent en oeuvre.

Des amortisseurs d'énergie connus comportent des moyens d'amortissement qui font appel à la compression ou à la traction de composants élastiques, notamment de ressorts. D'autres amortisseurs d'énergie connus font appel à la déformation, par exemple plastique, et/ou à la rupture de matériaux lorsqu'ils sont sollicités en compression ou en traction. De tels amortisseurs sont le plus souvent à usage unique.

Les lignes de vies équipées de tels amortisseurs d'énergie donnent satisfaction pour limiter les conséquences d'une chute et retenir un intervenant. Cependant, elles ne permettent pas de transmettre une information permettant d'identifier qu'une chute a eue lieu.

L'objet de la présente invention est d'obvier à cet inconvénient.

### RESUME DE L'INVENTION

A cet effet, la présente invention propose un dispositif de détection de chute pour une ligne de vie, destiné à être monté sur un amortisseur d'énergie, ledit amortisseur d'énergie comprenant une partie statique et une partie mobile solidarisées entre elles où la partie mobile se déplace par rapport à la partie statique en cas d'effort supérieur à une valeur d'effort seuil et actionne des moyens d'amortissement, où la partie statique et la partie mobile comprennent chacune des moyens de fixation disposés à une de leurs extrémités, où ladite extrémité de la partie mobile est destinée à être reliée à un câble de ligne de vie relié à une partie d'ancrage d'une structure d'accueil et l'extrémité de la partie statique est reliée à une autre partie d'ancrage de la structure d'accueil, où ledit dispositif de détection de chute comprend un capteur et un dispositif de suivi de trajectoire solidarisé avec l'extrémité de la partie statique ou avec l'extrémité de la partie mobile et libre de se déplacer respectivement avec l'extrémité de la partie mobile ou avec l'extrémité de la partie statique, ledit dispositif de suivi de trajectoire étant adapté à actionner le capteur quand la partie mobile se déplace de manière à générer une information relative au déplacement de la partie mobile par rapport à la partie statique.

Un tel dispositif de détection de chute, monté sur un amortisseur d'énergie d'une ligne de vie permet avantageusement de détecter qu'une chute d'un intervenant a eu lieu et d'adresser un signal approprié permettant d'en tirer les conséquences et notamment de prendre des mesures destinées à porter secours à l'intervenant qui a fait une chute.

On note également que ledit dispositif est destiné à être monté sur un amortisseur d'énergie et de ce fait est susceptible d'être compact et de s'intégrer parfaitement avec l'ensemble des composants de la ligne de vie.

Comme précédemment mentionné et de manière tout à fait usuelle, l'amortisseur d'énergie ne se met pas en oeuvre dans des conditions d'utilisation normales et comprend des moyens de seuil de déclenchement prévus de manière à permettre d'actionner la partie mobile par rapport à la partie statique à partir d'une valeur d'effort seuil estimée et/ou calibrée comme correspondant à la chute d'un intervenant. Les amortisseurs d'énergie pour ligne de vie sont communément commercialisés avec des informations relatives audites valeurs d'effort seuil. Par ailleurs cette valeur seuil est sans incidence sur le fonctionnement du présent dispositif de détection de chute, puisque celui-ci comprend des moyens pour suivre la trajectoire de la partie mobile par rapport à la partie statique, c'est-à-dire qu'il s'actionne après que ladite valeur seuil ait été atteinte.

Dans le cadre de la présente invention, on entend par « câble » tout faisceau de fils, notamment tressés, s'étendant selon une direction longitudinale. Un câble est généralement constitué d'une pluralité de torons assemblés. Les fils peuvent être des fils textiles naturels ou de synthèse. Les fils peuvent être de nature organique ou métallique. Selon un mode de réalisation le câble comprend des fibres métalliques, notamment en acier.

Dans le cadre de la présente invention, on entend par « dispositif de suivi de trajectoire » tout dispositif susceptible de mesurer une variation de distance entre deux points. A titre d'exemples, un dispositif de suivi de trajectoire peut mettre en oeuvre des moyens de mesure grâce à un dispositif mécanique et/ou grâce à un dispositif électrique et/ou grâce à un dispositif optique.

Dans le cadre de la présente invention, on entend par « structure d'accueil » toute construction ou installation, notamment industrielle, sur laquelle on souhaite procéder à des opérations au-dessus du sol et sécuriser l'intervention d'un opérateur par l'installation d'une ligne de vie entre deux points de ladite structure. Il convient de noter que la ligne de vie est en général horizontale, mais qu'elle peut également être disposée de manière inclinée par rapport à une horizontale.

Selon un mode de réalisation la ligne de vie de la présente invention est disposée sur une installation industrielle où des fluides chimiques sont manipulés. Il peut s'agir par exemple d'une structure supportant des réservoirs de produits chimiques liquides ou gazeux, comprenant des orifices disposés au-dessus du sol permettant d'effectuer des prélèvements dans ces réservoirs. La présente invention trouve notamment des applications quand un intervenant doit opérer le chargement d'un camion-citerne disposé sous ou à côté de ces réservoirs.

Selon différents modes de réalisation dudit dispositif de détection de chute pour une ligne de vie qui peuvent être combinés entre eux selon tous les modes de réalisations envisageables techniquement :
- le dispositif de suivi de trajectoire est constitué d'une tige coulissante rigide solidarisée avec l'extrémité de la partie statique ou avec l'extrémité de la partie mobile et d'un logement solidarisé respectivement avec l'extrémité de la partie mobile ou avec l'extrémité de la partie statique, où la tige coulissante coulisse dans ledit logement ;
- le dispositif de détection de chute comprend un bras rigide solidarisé avec l'extrémité de la partie statique ou un bras rigide solidarisé avec l'extrémité de la partie mobile et où le dispositif de suivi de trajectoire est solidarisé au dit bras ; selon un mode de réalisation, ce dispositif de détection de chute comprend un bras rigide solidarisé avec l'extrémité de la partie mobile et un bras rigide solidarisé avec l'extrémité de la partie statique, où chacun des bras s'étend longitudinalement et est disposé selon un même axe longitudinal, et où le dispositif de suivi de trajectoire est soit en liaison coulissante avec le bras solidarisé avec l'extrémité de la partie mobile, soit en liaison coulissante avec le bras solidarisé avec l'extrémité de la partie mobile ;
- le capteur est un capteur de déplacement ;
- le capteur de déplacement comprend une tige de suivi, rigide et mobile, dont le mouvement engendre une information et où le dispositif de suivi de trajectoire comprend des caractéristiques géométriques adaptées à coopérer avec ladite tige de suivi afin de la mouvoir quand la partie mobile d'un amortisseur d'énergie se déplace par rapport à sa partie statique ;
- une encoche est réalisée dans la tige coulissante et soit la tige de suivi est disposée au repos dans ladite encoche de manière à pouvoir s'en extraire quand la partie mobile d'un amortisseur d'énergie se déplace par rapport à sa partie statique, soit la tige de suivi est disposée de manière à pénétrer dans ladite encoche quand la partie mobile d'un amortisseur d'énergie se déplace par rapport à sa partie statique.

La présente invention vise également une installation de ligne de vie disposée sur une structure d'accueil comprenant un câble de ligne de vie ancré à une extrémité à la structure d'accueil et à un amortisseur d'énergie à l'autre extrémité, où l'amortisseur d'énergie comprend une partie statique et une partie mobile solidarisées entre elles, la partie mobile se déplaçant par rapport à la partie statique en cas d'effort supérieur à une valeur d'effort seuil et actionnant des moyens d'amortissement, la partie statique et la partie mobile comprenant chacune des moyens de fixation disposés à une de leurs extrémités, l'extrémité de la partie mobile étant reliée au câble de ligne de vie et l'extrémité de la partie statique étant reliée à une autre partie d'ancrage de la structure d'accueil, et où l'installation de ligne de vie comprend également un dispositif de détection de chute mentionné ci-dessus comprenant un capteur disposés en coopération avec l'amortisseur d'énergie de manière à générer une information quand la partie mobile de l'amortisseur d'énergie se déplace.

Selon différents modes de réalisation de ladite installation de ligne de vie qui peuvent être combinés entre eux selon tous les modes de réalisations envisageables techniquement :
- la partie statique et la partie mobile des moyens d'amortissement s'étendent longitudinalement selon un même axe ;
- le dispositif de détection de chute comprend un bras rigide solidarisé avec l'extrémité de la partie mobile et un bras rigide solidarisé avec l'extrémité de la partie statique, où chacun des bras s'étend longitudinalement et est disposé selon un même axe longitudinal, et où le dispositif de suivi de trajectoire est soit en liaison coulissante avec le bras solidarisé avec l'extrémité de la partie mobile, soit en liaison coulissante avec le bras solidarisé avec l'extrémité de la partie mobile et où l'axe selon lequel s'étendent la partie statique et la partie mobile des moyens d'amortissement est confondu avec l'axe selon lequel s'étend le bras rigide solidarisé avec l'extrémité de la partie mobile et le bras rigide solidarisé avec l'extrémité de la partie statique.

La présente invention vise également une méthode de détection de chute mettant en oeuvre une installation de ligne de vie mentionnée ci-dessus où l'information relative au déplacement de la partie mobile de l'amortisseur d'énergie est transmise à une centrale de contrôle. Selon un mode de réalisation, l'information transmise génère des étapes supplémentaires de déclenchement d'alertes et/ou d'actions de secours.

### DESCRIPTION DES FIGURES

La figure 1 représente une installation de ligne de vie disposée sur une structure d'accueil ;
Les figures 2 à 5 représentent un amortisseur d'énergie sur lequel est monté un dispositif de détection de chute selon la présente invention, destinés à être montés sur une ligne de vie.

Sur les différentes figures, les éléments analogues sont désignés par des références identiques. En outre, les différents éléments ne sont pas nécessairement représentés à l'échelle afin de présenter une vue permettant de faciliter la compréhension de l'invention.

### DESCRIPTION DETAILLEE DE L'INVENTION

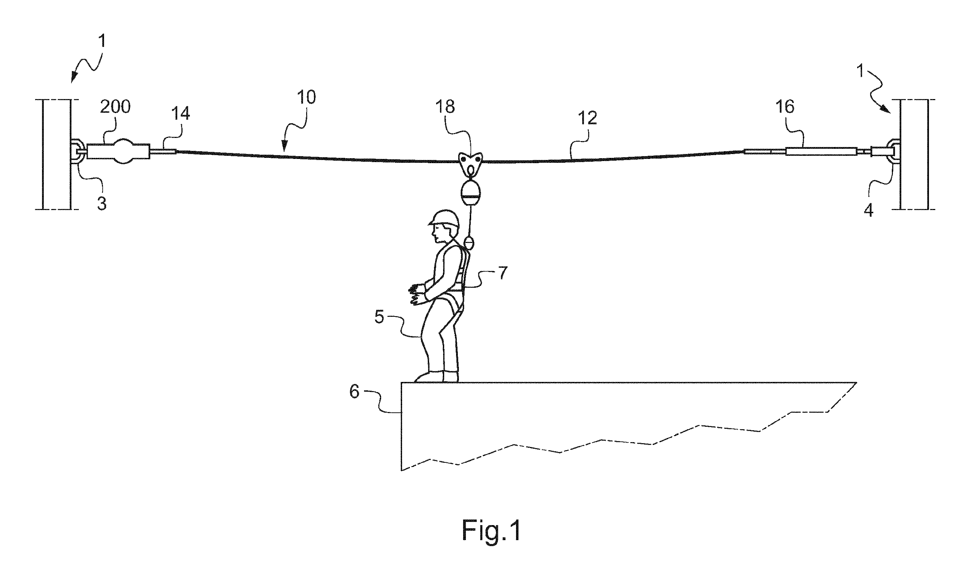

La figure 1 représente une installation de ligne de vie 10 disposée sur une structure d'accueil 1. La structure d'accueil peut par exemple être une structure d'une installation industrielle ou une partie d'un bâtiment. On peut également utiliser une telle ligne de vie et un dispositif de détection de chute selon la présente invention dans de nombreux autres domaines, par exemple pour des activités de plein air. Dans l'exemple représenté, la ligne de vie est disposée horizontalement ; une ligne de vie et un dispositif de détection de chute selon la présente invention peuvent également être utilisés pour suivre une trajectoire inclinée, voire verticale. Dans l'exemple représenté, l'installation de ligne de vie permet à un intervenant 5 de se déplacer sur une plateforme 6 située en hauteur, où le déplacement peut conduire à un risque de chute. De manière usuelle, l'installation de ligne de vie comprend un câble 12 dont les extrémités sont reliées à des dispositifs 14, 16 de réglage de la tension du câble, connus d'un homme du métier des équipements de protection individuelle ; le câble peut par exemple être en acier ; il peut néanmoins être constitué de tout assemblage de filaments dont la structure ou la nature sont adaptées à supporter les efforts liés à la chute d'un opérateur. Il est également possible d'utiliser des filins ou des cordes constituées de divers filaments. Le dispositif 14 de réglage de la tension du câble est par ailleurs relié à un amortisseur d'énergie 200, également connu ; de manière usuelle, le dispositif 16 de réglage de la tension du câble est par ailleurs relié à une partie d'ancrage 4 de la structure d'accueil ; l'amortisseur d'énergie 200 est par ailleurs relié à une partie d'ancrage 3 de la structure d'accueil. Une partie d'ancrage de la structure d'accueil peut par exemple être un anneau scellé dans la structure d'accueil auquel un élément est relié par exemple par un anneau, un mousqueton ou tout autre moyen de liaison adapté. L'intervenant 5 porte un harnais ou baudrier 7 relié par une longe, une sangle ou un stop chute à une poulie 18 coulissant sur le câble de ligne de vie 12. L'intervenant peut ainsi se déplacer aisément sur la plateforme 6 et n'est pas gêné dans ses mouvements. Il peut procéder à de nombreuses opérations, notamment des manipulations de charges, des opérations liées à une installation, par exemple chimique, des travaux de construction ou de réparation. Si l'intervenant 5 chute, un effort de crête est induit dans le câble de la ligne de vie qui conduit à actionner le dispositif amortisseur d'énergie afin d'amortir l'effet de la chute de l'intervenant.

Dans un exemple selon l'invention, la structure d'accueil est une installation chimique comprenant une pluralité de réservoirs fixes de fluides chimiques, liquides et/ou gazeux ; l'intervenant a notamment pour mission de remplir le réservoir d'un camion susceptible de transporter des produits chimiques. L'intervenant opère depuis une plateforme située au-dessus du camion et doit saisir un tuyau de distribution dont une extrémité est reliée au réservoir fixe et l'autre extrémité est introduite dans une ouverture du camion, en général ménagée au-dessus du réservoir du camion. Dans un mode de réalisation, l'intervenant est également le chauffeur dudit camion. Il est fréquent que dans les installations de distribution de produits chimiques à partir d'une pluralité de réservoirs, un seul intervenant soit chargé de l'ensemble des taches relatives au chargement du réservoir d'un camion et à la manutention du camion; cet intervenant peut se retrouver isolé et il est prudent de prévoir des moyens pour informer une installation ou un dispositif de sécurité d'une anomalie, notamment d'une chute de cet intervenant. Il est par ailleurs possible de réunir d'autres informations, par exemple grâce à des caméras de surveillance. En cas d'alerte sérieuse, une intervention peut être décidée et des tiers amenés à porter secours à l'intervenant.

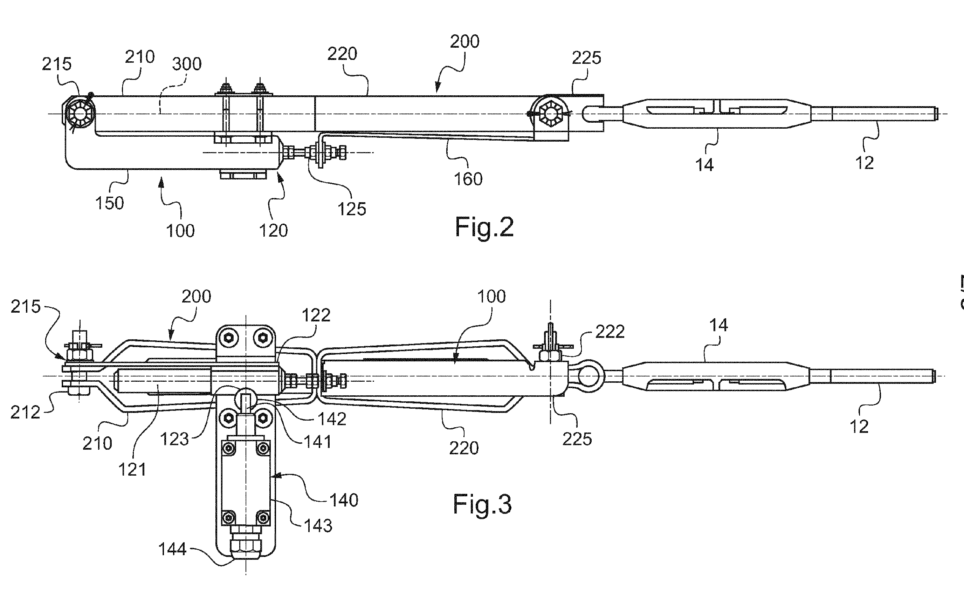

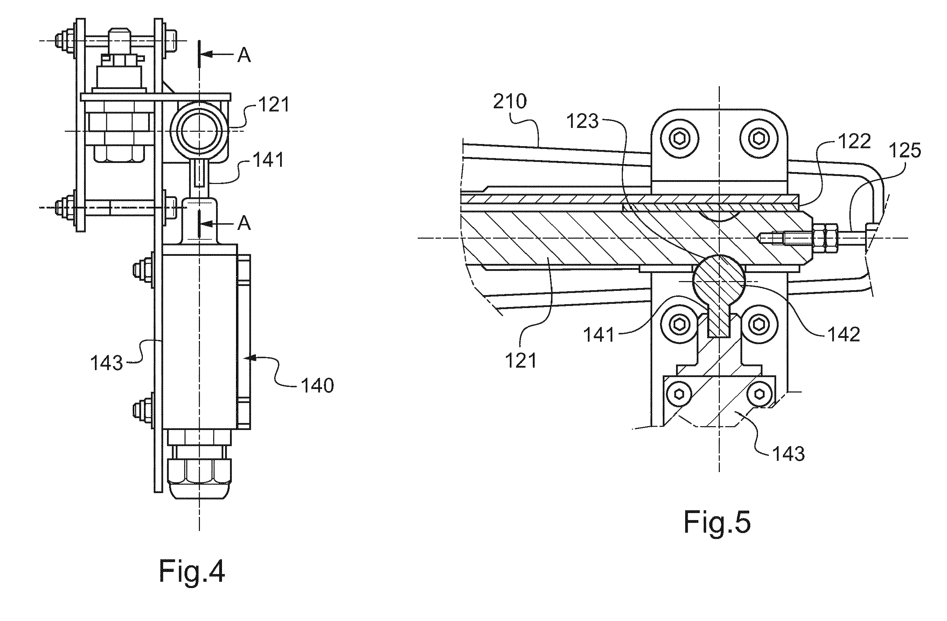

Les figures 2 à 5 représentent un amortisseur d'énergie 200 sur lequel est monté un dispositif de détection de chute 100, destinés à être montés sur une ligne de vie. La figure 2 est une vue de face ; la figure 3 est une vue de dessus ; la figure 4 est une vue latérale ; la figure 5 est une vue en coupe selon A-A.

L'amortisseur d'énergie 200 représenté est commercialisé par la société « LATCHWAYS Fall protection » sous la référence ManSafe® - Super 12 Xtenda C/W Line Tenser.

L'amortisseur d'énergie 200 comprend une partie statique 210 et une partie mobile 220 solidarisées entre elles. La partie mobile se déplace par rapport à la partie statique en cas d'effort supérieur à une valeur d'effort seuil et actionne des moyens d'amortissement. Comme précédemment mentionné, la valeur seuil est déterminée par l'installateur ou le concepteur de la ligne de vie de manière à ce que le déclenchement de la séparation des deux parties s'opère quand une chute a lieu. La longueur de l'amortisseur d'énergie 200 est d'environ 400 mm à l'état initial, c'est-à-dire comprimé, et d'environ 450 mm après déploiement quand les moyens d'amortissement ont été actionnés. La partie statique et la partie mobile comprennent chacune des moyens de fixation respectivement 212, 222 disposés à une de leurs extrémités, respectivement 215, 225. Ces moyens 212, 222 sont constitués de vis, boulons, clavettes. Ils permettent de relier l'amortisseur d'énergie 200 à d'autres composants. L'amortisseur d'énergie 200 s'étend longitudinalement selon un axe 300. Dans l'amortisseur représenté, les deux extrémités 215, 225 sont disposées à l'opposé l'une de l'autre, de part et d'autre de l'amortisseur. L'extrémité de la partie mobile, 225, est reliée grâce aux moyens de fixation 222 à une extrémité du câble 12 de ligne de vie par l'intermédiaire d'un dispositif 14 de réglage de la tension du câble. Le câble 12 de ligne de vie est relié à son autre extrémité à la partie d'ancrage 4 de la structure d'accueil. L'extrémité de la partie statique, 215, est reliée grâce aux moyens de fixation 212 à l'autre partie d'ancrage 3 de la structure d'accueil par tout moyen approprié.

Le dispositif de détection de chute 100, selon la présente invention, est monté sur l'amortisseur d'énergie 200 de manière à générer une information relative au déplacement de la partie mobile 220 de l'amortisseur d'énergie 200 par rapport à sa partie statique 210.

Le dispositif de détection de chute 100 comprend un capteur 140 et un dispositif 120 de suivi de trajectoire solidarisé avec l'extrémité de la partie statique 215 et libre de se déplacer avec l'extrémité de la partie mobile 225. Le dispositif de suivi de trajectoire actionne le capteur 140 quand la partie mobile 220 se déplace.

Le dispositif 120 comprend une tige coulissante rigide 121 solidarisée avec l'extrémité de la partie mobile et un logement 122 solidarisé avec la partie statique 210. Le logement 122 est solidarisé avec l'extrémité de la partie statique par une pièce intermédiaire.

La tige coulissante 121 coulisse librement dans le logement 122. Le logement 122 est un cylindre creux. La longueur de la tige coulissante 121 est du même ordre de grandeur que celle de la partie statique. La tige coulissante 121 comprend une partie principale de diamètre légèrement inférieur au diamètre intérieur du cylindre creux constituant le logement et une extrémité constituée d'une tige filetée vissée d'une part dans une ouverture filetée de la partie principale et d'autre part maintenue par des écrous 125 à une pièce solidaire de l'extrémité de la partie mobile 225.

Dans ce mode de réalisation, le dispositif de détection de chute comprend un bras rigide 150 solidarisé avec l'extrémité 215 de la partie statique et un bras rigide 160 solidarisé avec l'extrémité 225 de la partie statique. Chacun des bras s'étend longitudinalement et est disposé selon l'axe longitudinal 300. Les bras rigides 150 et 160 sont obtenus par découpage et pliage d'une tôle en acier.

Le bras rigide 150 a la forme d'un L dont la partie principale est disposée selon l'axe 300 et le retour perpendiculairement; le retour du L du bras rigide 150 comprend une lumière à travers de laquelle passe le corps de la vis du moyen de fixation 212, formant ainsi une pièce intermédiaire de solidarisation. Le logement 122 est soudé à la partie principale du L du bras rigide 150 ; le logement 122 est ainsi solidarisé avec l'extrémité de la partie statique 210.

Le bras rigide 160 a la forme d'un double L dont la partie principale est disposée selon l'axe 300 et les retours perpendiculairement ; le premier retour du double L du bras rigide 160 comprend une lumière à travers de laquelle passe le corps de la vis du moyen de fixation 222, formant ainsi une pièce intermédiaire de solidarisation. L'autre retour du double L du bras rigide 160 comprend un trou et est disposé de manière à recevoir la tige filetée de la tige coulissante 121 ; les écrous 125 solidarisent la tige filetée à ce retour du double L et ainsi à l'extrémité de la partie mobile 225.

Le capteur 140 est un capteur de déplacement commercialisé par la société BARTEC, sous la référence commerciale 07-2911-1 3 30/20. Il comprend une tige de suivi 141, rigide et mobile ; la tige de suivi 141 comprend à son extrémité un disque roulant 142 qui est disposée de manière à suivre un profil de la surface de la tige coulissante 121. La tige 141 actionne un dispositif adapté pour générer un signal électrique quand elle se déplace dans le corps 143 du capteur. Un câble électrique passant par l'orifice 144 transmet le signal vers un dispositif de traitement du signal afin d'enregistrer et d'exploiter le signal.

Le capteur 140 et notamment la tige 141 sont disposés perpendiculairement à l'axe 300. Le capteur 140 est maintenu sur la partie fixe 210 par deux plaques disposées de part et d'autre de la partie fixe et vissées entre elles ; l'une des plaques est soudée au bras rigide 150.

Le profil de la surface de la tige coulissante 121 avec lequel le disque roulant 142 est en contact comprend une encoche 123. Le disque de la tige de suivi 141 est disposé au repos dans cette encoche, c'est-à-dire quand l'amortisseur d'énergie est comprimé à son état initial ; quand celui-ci se déploie après que les moyens d'amortissement ont été actionnés, la tige de suivi 141 sort de cette encoche et la variation de mouvement associée est détectée par le capteur 140 qui la transforme sous la forme d'un signal.

Les constituants du dispositif de détection de chute 100 sont avantageusement conçus pour être montés sur l'amortisseur d'énergie 200 de manière compacte et facile à monter et à démonter.

On dispose ainsi d'un dispositif et d'une méthode de détection de chute où l'information relative au déplacement de la partie mobile de l'amortisseur d'énergie est transmise à une centrale de contrôle. L'information transmise peut générer des étapes supplémentaires de déclenchement d'alertes et/ou d'actions de secours. Il est alors possible de porter rapidement secours à l'intervenant qui a fait une chute.

Bien entendu, la présente invention n'est pas limitée aux exemples et aux modes de réalisation décrits et représentés, mais elle est susceptible de nombreuses variantes accessibles à l'homme du métier.

## Revendications

1. Dispositif de détection de chute (100) pour une ligne de vie (10), destiné à être monté sur un amortisseur d'énergie (200), ledit amortisseur d'énergie comprenant une partie statique (210) et une partie mobile (220) solidarisées entre elles où la partie mobile se déplace par rapport à la partie statique en cas d'effort supérieur à une valeur d'effort seuil et actionne des moyens d'amortissement, où la partie statique et la partie mobile comprennent chacune des moyens de fixation (212, 222) disposés à une de leurs extrémités (215, 225), où ladite extrémité de la partie mobile (225) est destinée à être reliée à un câble (12) de ligne de vie relié à une partie d'ancrage (4) d'une structure d'accueil (1) et l'extrémité de la partie statique (215) est reliée à une autre partie d'ancrage (3) de la structure d'accueil, **caractérisé en ce que** ledit dispositif de détection de chute (100) comprend un capteur (140) et un dispositif (120) de suivi de trajectoire solidarisé avec l'extrémité de la partie statique (215) ou avec l'extrémité de la partie mobile (225) et libre de se déplacer respectivement avec l'extrémité de la partie mobile (225) ou avec l'extrémité de la partie statique (215), ledit dispositif de suivi de trajectoire étant adapté à actionner le capteur (140) quand la partie mobile (220) se déplace de manière à générer une information relative au déplacement de la partie mobile (220) par rapport à la partie statique (210), où le dispositif de suivi de trajectoire (120) est constitué d'une tige coulissante rigide (121) solidarisée avec l'extrémité de la partie statique ou avec l'extrémité de la partie mobile et d'un logement (122) solidarisé respectivement avec l'extrémité de la partie mobile ou avec l'extrémité de la partie statique, et où la tige coulissante coulisse dans ledit logement.

2. Dispositif de détection de chute selon l'une des revendications 1, comprenant un bras rigide (150) solidarisé avec l'extrémité de la partie statique ou un bras rigide (160) solidarisé avec l'extrémité de la partie mobile et où le dispositif de suivi de trajectoire est solidarisé au dit bras.

3. Dispositif de détection de chute selon la revendication 2, comprenant un bras rigide (150) solidarisé avec l'extrémité de la partie mobile et un bras rigide (160) solidarisé avec l'extrémité de la partie statique, où chacun des bras s'étend longitudinalement et est disposé selon un même axe longitudinal (300), et où le dispositif de suivi de trajectoire est soit en liaison coulissante avec le bras solidarisé avec l'extrémité de la partie mobile, soit en liaison coulissante avec le bras solidarisé avec l'extrémité de la partie mobile.

4. Dispositif de détection de chute selon l'une quelconque des revendications précédentes, où le capteur (140) est un capteur de déplacement.

5. Dispositif de détection de chute selon la revendication précédente, où le capteur de déplacement comprend une tige de suivi (141), rigide et mobile, dont le mouvement engendre une information et où le dispositif de suivi de trajectoire comprend des caractéristiques géométriques adaptées à coopérer avec ladite tige de suivi afin de la mouvoir quand la partie mobile d'un amortisseur d'énergie se déplace par rapport à sa partie statique.

6. Dispositif de détection de chute selon la revendication 5, où une encoche (123) est réalisée dans la tige coulissante (121) et où soit la tige de suivi est disposée au repos dans ladite encoche de manière à pouvoir s'en extraire quand la partie mobile d'un amortisseur d'énergie se déplace par rapport à sa partie statique, soit la tige de suivi est disposée de manière à pénétrer dans ladite encoche quand la partie mobile d'un amortisseur d'énergie se déplace par rapport à sa partie statique.

7. Installation de ligne de vie disposée sur une structure d'accueil (1) comprenant un câble de ligne de vie (10) ancré à une extrémité à la structure d'accueil et à un amortisseur d'énergie à l'autre extrémité, où l'amortisseur d'énergie (200) comprend une partie statique (210) et une partie mobile (220) solidarisées entre elles, la partie mobile se déplaçant par rapport à la partie statique en cas d'effort supérieur à une valeur d'effort seuil et actionnant des moyens d'amortissement, la partie statique et la partie mobile comprenant chacune des moyens de fixation disposés à une de leurs extrémités, l'extrémité de la partie mobile étant reliée au câble de ligne de vie et l'extrémité de la partie statique étant reliée à une autre partie d'ancrage de la structure d'accueil, et où l'installation de ligne de vie comprend également un dispositif de détection de chute (100) pour une ligne de vie (10), destiné à être monté sur l'amortisseur d'énergie (200), ledit dispositif de détection de chute (100) comprenant un capteur (140) et un dispositif (120) de suivi de trajectoire solidarisé avec l'extrémité de la partie statique (215) ou avec l'extrémité de la partie mobile (225) et libre de se déplacer respectivement avec l'extrémité de la partie mobile (225) ou avec l'extrémité de la partie statique (215), ledit dispositif de suivi de trajectoire étant adapté à actionner le capteur (140) quand la partie mobile (220) se déplace de manière à générer une information relative au déplacement de la partie mobile (220) par rapport à la partie statique (210).

8. Installation de ligne de vie selon la revendication 7, dans laquelle le dispositif de détection de chute (100) est un dispositif de détection de chute selon l'une quelconque des revendications 1 à 6.

9. Installation de ligne de vie selon la revendication 7 ou 8 où la partie statique et la partie mobile des moyens d'amortissement s'étendent longitudinalement selon un même axe (300).

10. Installation de ligne de vie selon la revendication précédente où le dispositif de détection de chute comprend les caractéristiques de la revendication 3 et où l'axe selon lequel s'étendent la partie statique et la partie mobile des moyens d'amortissement est confondu avec l'axe selon lequel s'étend le bras rigide solidarisé avec l'extrémité de la partie mobile et le bras rigide solidarisé avec l'extrémité de la partie statique.

11. Méthode de détection de chute mettant en oeuvre une installation de ligne de vie selon la revendication précédente où l'information relative au déplacement de la partie mobile de l'amortisseur d'énergie est transmise à une centrale de contrôle.

12. Méthode de détection de chute selon la revendication précédente où l'information transmise génère des étapes supplémentaires de déclenchement d'alertes et/ou d'actions de secours.
